(19) Europäisches Patentamt
European Patent Office
Office européen des brevets

(11) EP 0 503 422 B1

(12) # EUROPÄISCHE PATENTSCHRIFT

(45) Veröffentlichungstag und Bekanntmachung des Hinweises auf die Patenterteilung:
**03.06.1998 Patentblatt 1998/23**

(51) Int Cl.6: **C08F 232/08**

(21) Anmeldenummer: **92103538.2**

(22) Anmeldetag: **02.03.1992**

(54) **Verfahren zur Herstellung chemisch einheitlicher Cycloolefincopolymere**

Process for the preparation of chemically homogenous cycloolefinic copolymers

Procédé pour la préparation de copolymères cycloléfiniques chimiquement homogènes

(84) Benannte Vertragsstaaten:
**AT BE CH DE ES FR GB GR IT LI NL SE**

(30) Priorität: **09.03.1991 DE 4107682**

(43) Veröffentlichungstag der Anmeldung:
**16.09.1992 Patentblatt 1992/38**

(60) Teilanmeldung: **96108898.6 / 0 729 977**

(73) Patentinhaber: **TARGOR GmbH**
**55116 Mainz (DE)**

(72) Erfinder:
- **Brekner, Michael-Joachim, Dr.**
  **W-6000 Frankfurt am Main 71 (DE)**
- **Osan, Frank, Dr.**
  **W-6233 Kelkheim (Taunus) (DE)**
- **Rohrmann, Jürgen, Dr.**
  **W-6233 Kelkheim (Taunus) (DE)**
- **Antberg, Martin, Dr.**
  **W-6238 Hofheim am Taunus (DE)**

(56) Entgegenhaltungen:
**EP-A- 0 283 164** **EP-A- 0 407 870**
**DE-A- 3 835 044**

- **PATENT ABSTRACTS OF JAPAN vol. 11, no. 60 (C-405)(2507) 24. Februar 1987**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 503 422 B1

Printed by Jouve, 75001 PARIS (FR)

## Beschreibung

Die Erfindung bezieht sich auf ein Verfahren zur Herstellung von Copolymeren von polycyclischen Olefinen, wobei keine Ringöffnung erfolgt.

Es ist bekannt, daß polycyclische Olefine mittels verschiedener Ziegler- Katalysatoren polymerisiert werden können. Die Polymerisation verläuft in Abhängigkeit vom Katalysator über Ringöffnung (vgl. US 4 178 424) oder Öffnung der Doppelbindung (vgl. EP-A 156 464, EP-A 283 164, EP-A-203.799).

Der Nachteil einer ringöffnenden Polymerisation besteht darin, daß das erhaltene Polymerisat Doppelbindungen enthält, die zu Kettenvernetzungen führen können und damit die Verarbeitbarkeit des Materials durch Extrudieren oder Spritzgießen erheblich einschränken.

Die Polymerisation unter Öffnung der Doppelbindung führt bei cyclischen Olefinen zu einer relativ niederen Polymerisationsgeschwindigkeit [Umsatzrate).

Eine gewisse Erhöhung der Reaktionsgeschwindigkeit wurde durch die Verwendung löslicher Metallocenverbindungen wie Bis-(Cyclopentadienyl)-zirkoniumdichlorid erreicht (vgl. JP 61-221206).

Aus EP-A-407 870 sind Polymerisate von polycyclischen Olefinen mit einer Viskositätszahl größer 20 $cm^3/g$ und einer Glastemperatur oberhalb 100 °C bekannt, die ohne Ringöffnung mit einer hohen Polymerisationsgeschwindigkeit mittels eines Katalysators erhalten werden. Der Katalysator besteht aus einer stereorigiden, chiralen Metallocenverbindung der Gruppen IVb bis VIb des Periodensystems der Elemente und einem Aluminoxan.

Aus EP-A-283 164 ist ein statistisches Cycloolefin-Copolymer bekannt, das Einheiten enthält, die abgeleitet sind von (A) einer $\alpha$-Olefinkomponente mit 3 bis 20 Kohlenstoffatomen, (B) einer gegebenenfalls vorhandenen cyclischen Polyen komponente und (C) einer Cycloolefinkomponente.

Aus DE-A-3835044 ist ein Verfahren zur Herstellung von Mono- und Copolymerisaten von polycyclischen Olefinen bekannt, die ohne Ringöffnung mit einer hohen Polymerisationsgeschwindigkeit mittels eines Katalysators erhalten werden. Der Katalysator besteht aus einer stereorigiden, chiralen Metallocenverbindung der Gruppen IVb bis VIb des Periodensystems der Elemente und einem Aluminoxan.

Als Katalysator läßt sich bei cyclischen Olefinen eine stereorigide chirale Metallocenverbindung wie z.B. Ethylen-bis(indenyl)zirkoniumdichlorid (vgl. EP-A 283164) oder Dimethylsilyl-bis(indenyl)zirkoniumdichlorid verwenden, wobei die Polymerisation unter Erhalt des Ringes erfolgt.

Die Glastemperatur amorpher Copolymere korreliert mit den Einbauraten der Comonomere in das Polymer. Beispielsweise erhöht sich die Glastemperatur von Norbornen/Ethylen-Copolymeren pro Molprozent Norbornen im Polymer um 4 bis 5 Kelvin. Die Glastemperatur ist ein indirektes Maß für die Wärmeformbeständigkeit.

Versuche haben gezeigt, daß die erzielten Einbauverhältnisse bei Verwendung herkömmlicher Metallocenkatalysatoren sehr empfindlich durch die Reaktionsparameter wie Monomerkonzentration, Druck und Temperatur beeinflußt werden.

Bei diskontinuierlicher Polymerisation ist die chemische Einheitlichkeit der Produkte stark umsatzabhängig.

Bei kontinuierlichem Betrieb ist eine relativ lange Anfahrperiode notwendig, um zu stationären Reaktionsbedingungen zu kommen. Die in dieser Phase entstandenen chemisch uneinheitlichen Produkte liegen in der Regel außerhalb der für Handelsprodukte geforderten Spezifikationen.

In beiden Fällen ist eine geringere Empfindlichkeit der Katalyse auf Veränderungen der Reaktionsparameter wünschenswert, um Zeit und Abfall einzusparen und um höhere Raum-Zeit-Ausbeuten zu erzielen.

Statistische Copolymere sind durch eine statistische Verteilung der Comonomereinheiten in der Polymerkette gekennzeichnet. Dies hat eine höhere Fluktuation der Dichte des Materials zur Folge als dies bei Homopolymeren oder alternierenden Copolymeren gegeben ist. Dichtefluktuationen erhöhen jedoch den Streulichtanteil und mindern die Transparenz. Anwendungen, bei denen, wie bei Lichtwellenleitern, höchste Anforderungen an die Lichtdurchlässigkeit gestellt werden, sind dadurch eingeschränkt. Auch hier sind daher in hohem Maß chemisch einheitliche Produkte wünschenswert.

Unter chemischer Einheitlichkeit wird ein nahezu konstantes Einbauverhältnis der Monomeren in das Copolymer - über die jeweilige Polymerkette als auch über die Gesamtzahl der gebildeten Ketten (über die Polymerisationszeit) - verstanden. So steigt die chemische Einheitlichkeit in dem Maße wie sich die Copolymeren in ihrem Aufbau von einer statistischen zu einer alternierenden Monomerabfolge nähern.

Es bestand daher die Aufgabe, ein Verfahren zur Herstellung von Cycloolefincopolymeren zu finden, das, basierend auf der Polymerisation über die Doppelbindung, bei hoher Raum-Zeit-Ausbeute chemisch einheitliche Copolymere liefert, wobei gleichzeitig Veränderungen der Reaktionsparameter auf die chemische Einheitlichkeit der Produkte einen geringeren Einfluß haben als bei bekannten Verfahren.

Es wurde gefunden, daß mit speziellen Metallocenkatalysatoren diese Aufgabe gelöst werden kann.

Die Erfindung betrifft daher ein Verfahren zur Herstellung eines Cycloolefincopolymers durch Polymerisation von 0,1 bis 99,9 Gew.-%, bezogen auf die Gesamtmenge der Monomeren, mindestens eines Monomers der Formeln I, II, III, IV, V oder VI

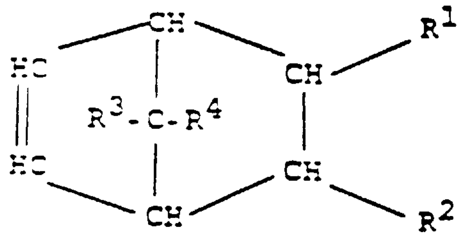

(I),

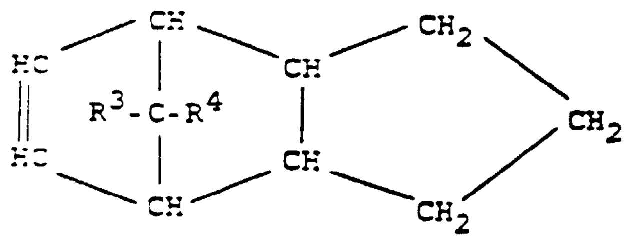

(II),

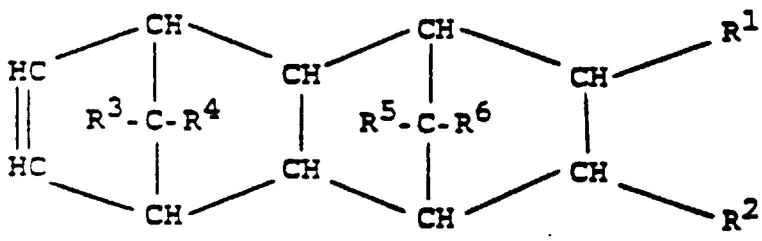

(III),

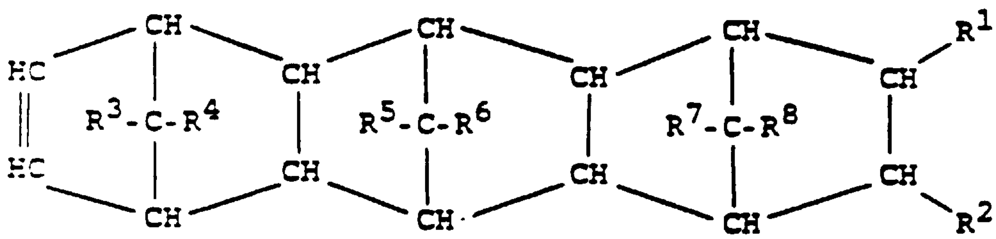

(IV),

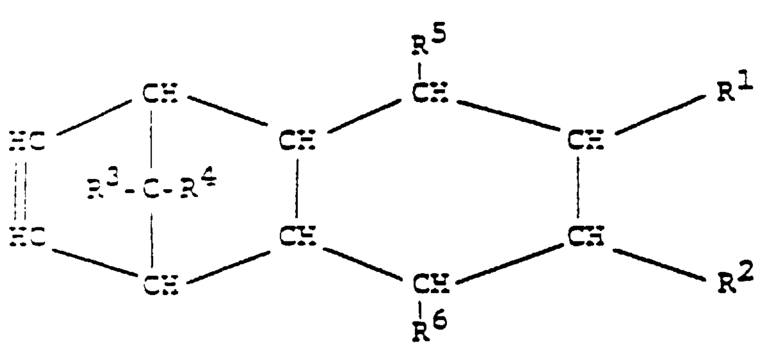

(V),

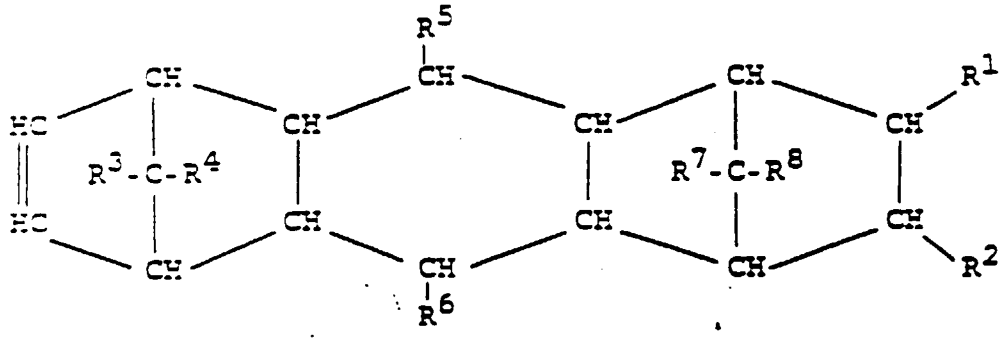

(VI),

worin $R^1$, $R^2$, $R^3$, $R^4$, $R^5$, $R^6$, $R^7$ und $R^8$ gleich oder verschieden sind und ein Wasserstoffatom, einen $C_6$-$C_{16}$-Aryl- oder einen $C_1$-$C_8$-Alkylrest bedeuten, wobei gleiche Reste in den verschiedenen Formeln eine unterschiedliche Bedeutung haben können,

0 bis 99,9 Gew.-%, bezogen auf die Gesamtmenge der Monomeren, eines Cycloolefins der Formel VII

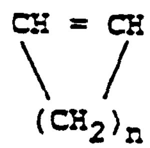

(VII),

worin n eine Zahl von 2 bis 10 ist, und

0 bis 99,9 Gew.-%, bezogen auf die Gesamtmenge der Monomeren, mindestens eines acyclischen Olefins der Formel VIII

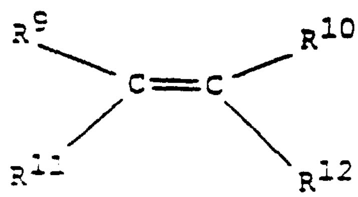

(VIII),

worin $R^9$, $R^{10}$, $R^{11}$ und $R^{12}$ gleich oder verschieden sind und ein Wasserstoffatom oder einen $C_1$-$C_8$-Alkylrest bedeuten, bei Temperaturen von -78 bis 150°C und einem Druck von 0,01 bis 64 bar, in Gegenwart eines Katalysators, welcher aus einem Aluminoxan der Formel IX

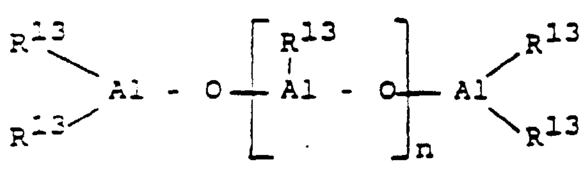

(IX)

für den linearen Typ und/oder der Formel X

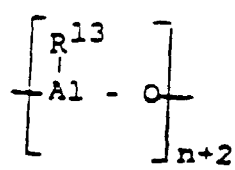

(X)

für den cyclischen Typ, wobei in den Formeln IX und X die Reste $R^{13}$ gleich oder verschieden sind und eine $C_1$-$C_6$-Alkylgruppe oder Phenyl oder Benzyl bedeuten und n eine ganze Zahl von 0 bis 50 ist, und einem Metallocen der Formel XI

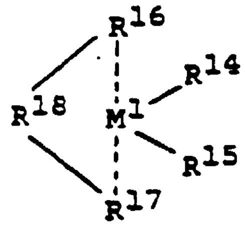

(XI)

besteht, worin

$M^1$ Titan, Zirkon, Hafnium, Vanadium, Niob oder Tantal ist,

$R^{14}$ und $R^{15}$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$. Arylalkenylgruppe bedeuten,

$R^{16}$ und $R^{17}$ verschieden sind und einen ein- oder mehrkernigen Kohlenwasserstoffrest, welcher mit dem Zentralatom $M^1$ eine Sandwichstruktur bilden kann, bedeuten,

$R^{18}$

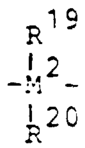 , 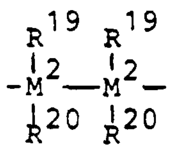 , 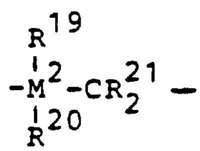 , 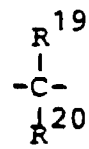 , 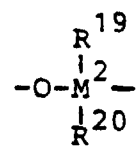 , 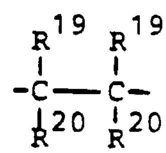 ,

= $BR^{19}$, = $AlR^{19}$, -Ge-, -Sn-, -O-, -S-, = SO, = $SO_2$, = $NR^{19}$, = CO, = $PR^{19}$ oder = $P(O)R^{19}$ ist, wobei $R^{19}$, $R^{20}$ und $R^{21}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$- Arylalkenylgruppe oder eine $C_7$-$C_{40}$-Alkylarylgruppe bedeuten oder $R^{19}$ und $R^{20}$ oder $R^{19}$ und $R^{21}$ jeweils mit den sie verbindenden Atomen einen Ring bilden, und

$M^2$ Silizium, Germanium oder Zinn ist, dadurch gekennzeichnet, daß der Teil des Metallocenmoleküls, der durch $M^1$ und die Substituenten $R^{16}$-$R^{17}$ gebildet wird, $C_1$-Symmetrie aufweist.

Dabei steht Alkyl für geradkettiges oder verzweigtes Alkyl.

Das monocyclische Olefin VII kann für die Zwecke der Erfindung auch substituiert sein (z.B. durch Aryl- oder Alkylreste).

Bevorzugt wird im flüssigen Cycloolefinmonomer, Cycloolefinmonomergemisch oder in konzentrierten Lösungen polymerisiert.

Im erfindungsgemäßen Verfahren wird mindestens ein polycyclisches Olefin der Formeln I, II, III, IV, V oder VI, vorzugsweise ein Cycloolefin der Formeln I oder III, worin $R^1$, $R^2$, $R^3$, $R^4$, $R^5$, $R^6$, $R^7$ und $R^8$ gleich oder verschieden sind und ein Wasserstoffatom oder einen $C_1$-$C_8$-Alkylrest bedeuten, wobei gleiche Reste in den verschiedenen Formeln eine unterschiedliche Bedeutung haben können, polymerisiert.

Gegebebenenfalls wird auch ein monocyclisches Olefin der Formel VII, worin n eine Zahl von 2 bis 10 ist, verwendet. Ein anderes Comonomer ist ein acyclisches Olefin der Formel VIII, worin $R^9$, $R^{10}$, $R^{11}$ und $R^{12}$ gleich oder verschieden sind und ein Wasserstoffatom oder einen $C_1$-$C_8$-Alkylrest bedeuten. Bevorzugt sind Ethylen oder Propylen.

Insbesondere werden Copolymere von polycyclischen Olefinen, vorzugsweise der Formeln I und III, mit den acyclischen Olefinen VIII hergestellt.

Besonders bevorzugte Cycloolefine sind Norbornen und Tetracyclododecen, wobei diese durch ($C_1$-$C_6$)-Alkyl substituiert sein können. Sie werden vorzugsweise mit Ethylen copolymerisiert; besondere Bedeutung besitzen Ethylen/Norbornen-Copolymere.

Bevorzugt werden Einbauverhältnisse der Comonomeren VII und/oder VIII in das Copolymer von 20:80 bis 80:20. Insbesondere werden Einbauverhältnisse von 40:60 bis 60:40 bevorzugt.

Das polycyclische Olefin (I bis VI) wird in einer Menge von 0,1 bis 99,9 Gew.-% und das monocyclische Olefin (VII) in einer Menge von 0,1 bis 99,9 Gew.-%, jeweils bezogen auf die Gesamtmenge der Monomeren, eingesetzt.

Die Konzentration des offenkettigen Olefins ergibt sich aus der Löslichkeit des offenkettigen Olefins in dem Reaktionsmedium bei gegebenem Druck und gegebener Temperatur.

Als polycyclische Olefine, monocyclische Olefine und offenkettige Olefine sind auch Gemische zweier oder mehrerer Olefine des jeweiligen Typs zu verstehen. Das heißt, es können neben polycyclischen Bicopolymeren auch Ter- und Multicopolymere nach dem erfindungsgemäßen Verfahren hergestellt werden. Auch Copolymere der Cycloolefine VII mit den acyclischen Olefinen VIII lassen sich vorteilhaft nach dem beschriebenen Verfahren erhalten. Von den Cycloolefinen VII ist Cyclopenten, das substituiert sein kann, bevorzugt.

Der für das erfindungsgemäße Verfahren zu verwendende Katalysator ist oben beschrieden und besteht aus einem Aluminiumoxan und mindestens einem Metallocen (Übergangsmetallkomponente) der Formel XI

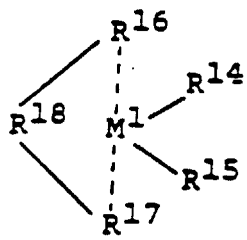

(XI).

In Formel XI ist $M^1$ ein Metall aus der Gruppe Titan, Zirkon, Hafnium, Vanadium, Niob und Tantal, vorzugsweise Zirkon und Hafnium. Besonders bevorzugt wird Zirkon verwendet.

$R^{14}$ und $R^{15}$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

Bevorzugt ist $R^{16}$ Fluorenyl und $R^{17}$ Cyclopentadienyl, wobei diese Reste substituiert sein können (im Fall der $C_1$-Symmetrie).

$R^{18}$ ist eine ein- oder mehrgliedrige Brücke, welche die Reste $R^{16}$ und $R^{17}$ verknüpft und bedeutet vorzugsweise

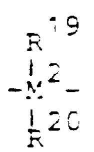 , 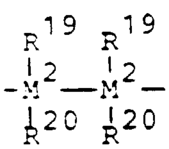 , 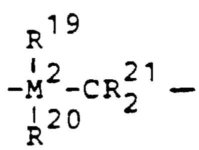 , 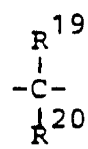 , 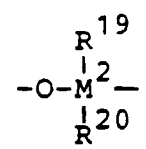 , 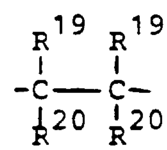 ,

= $BR^{19}$, = $AlR^{19}$, -Ge-, -Sn-, -O-, -S-, = SO, = $SO_2$, = $NR^{19}$, = CO, = $PR^{19}$ oder = $P(O)R^{19}$, wobei $R^{19}$, $R^{20}$ und $R^{21}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Arylgruppe, eine $C_1$-$C_{10}$-Alkoxygruppe, eine $C_2$-$G_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten, oder $R^{19}$ und $R^{20}$ oder $R^{19}$ und $R^{21}$ bilden jeweils zusammen mit den sie verbindenden Atomen einen Ring.

Bevorzugt ist $R^{18}$ ein Rest

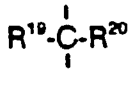

und besonders bevorzugt

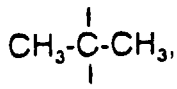 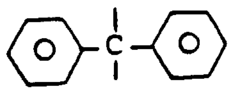 oder 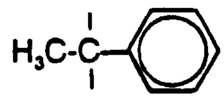 .

Von den Resten $R^{19}$-$M^2$-$R^{20}$ ist insbesondere Dimethylsilyl von Bedeutung.

$M^2$ ist Silizium, Germanium oder Zinn, bevorzugt Silizium oder Germanium.

Die verbrückten Metallocene können nach folgendem bekannten Reaktionsschema hergestellt werden:

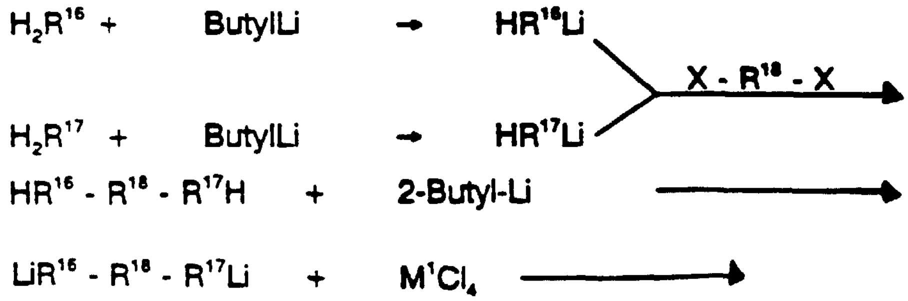


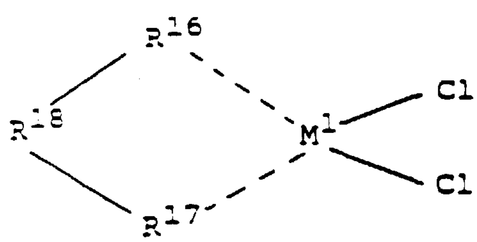

(XI)

oder

$$H_2R^{16} + \text{ButylLi} \rightarrow HR^{16}Li$$

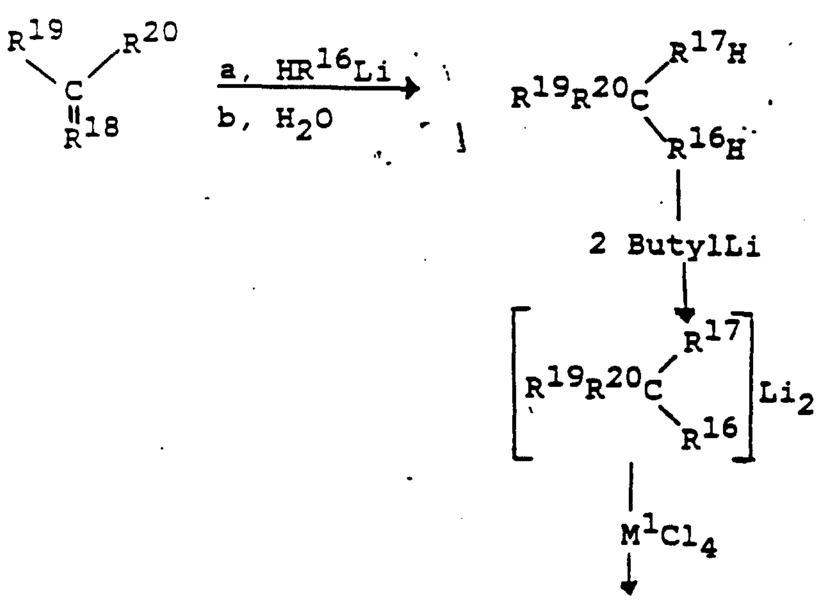

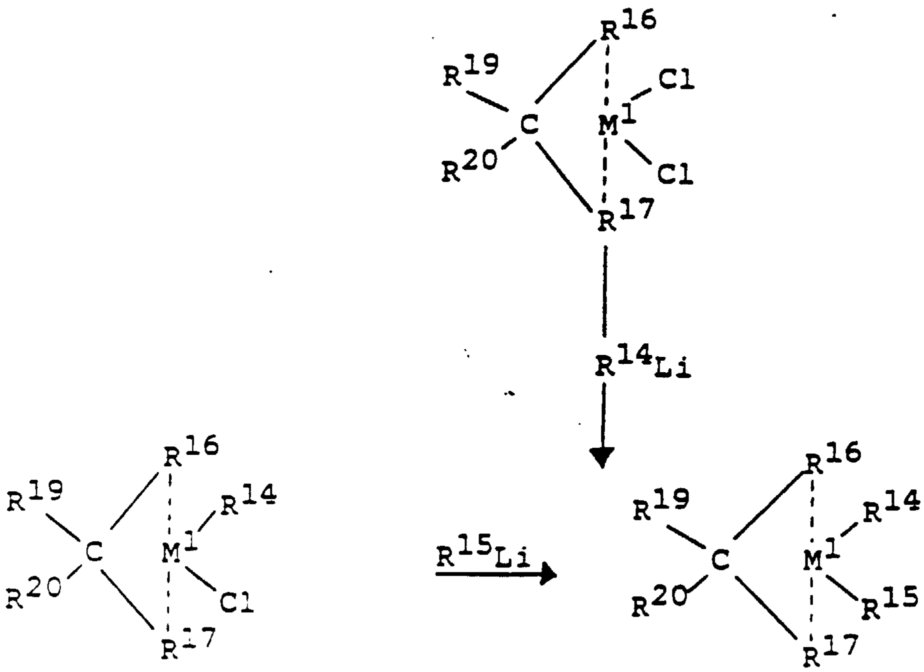


(XI)

Das obige Reaktionsschema gilt auch für die Fälle $R^{19} = R^{20}$ und/oder $R^{14} = R^{15}$ (vgl. Journal of Organometallic Chem. 288 (1985) 63-67 und EP-A 320 762).

Von den erfindungsgemäßen Metallocenen XI, welche in dem Teil des Moleküls, der durch das Zentralatom $M^1$ und die Substituenten $R^{16}$-$R^{17}$ gebildet wird, $C_1$-Symmetrie aufweisen (d.h. dieser Molekülteil weist keinerlei höhere Symmetrieelemente auf und ist nur durch eine Drehung um 360° - einzählige Achse - mit sich selbst zur Deckung zu bringen), sind besonders zu nennen:
Isopropylen-(9-fluorenyl)(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid und
Isopropylen-(9-fluorenyl)(1-(3-tert.-butyl)cyclopentadienyl)-zirkondichlorid und die entsprechenden Hafniumdichloride.

Zur Bedeutung des Begriffs $C_1$-Symmetrie vgl. K. Mislow "Einführung in die Stereochemie, Verlag Chemie, 1. Auflage 1967, S. 23 f..

Allgemein bevorzugt sind Ligandsysteme ($R^{16}$ - $R^{18}$), die eine unterschiedliche sterische Wechselwirkung auf die Liganden $R^{14}$ und $R^{15}$ ausüben können. Die Natur der Liganden $R^{14}$ und $R^{15}$ ist dabei ohne Bedeutung.

Der Cokatalysator ist (bevorzugt) ein Aluminoxan der Formel IX und/oder der Formel X. In diesen Formeln können die Reste $R^{13}$ gleich oder verschieden sein und bedeuten eine $C_1$-$C_6$-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 0 bis 50, bevorzugt 5 bis 40.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen $R^{13}$ werden entsprechend der gewünschten Zusammensetzung zwei verschiedene Aluminiumtrialkyle ($AlR_3 + AlR'_3$) mit Wasser umgesetzt (vgl. S. Pasynkiewicz, Polyhedron 9 (1990) 429 und EP-A 302 424).

Die genaue Struktur der Aluminoxane ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan der Formel (IX) und/oder (X) vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Das Metallocen kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel $R_xNH_{4-x}BR'_4$ oder der Formel $R_3PHBR'_4$ als Cokatalysator verwendet. Dabei sind x = 1, 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (vgl. EP-A 277 004).

Falls dem Reaktionsgemisch Lösemittel zugesetzt wird, dann handelt es sich um gebräuchliche inerte Lösemittel wie z.B. aliphatische oder cycloaliphatische Kohlenwasserstoffe, Benzin- bzw. hydrierte Dieselölfraktionen oder Toluol.

Die Metallocenverbindung wird in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Reaktorvolumen angewendet. Das Aluminoxan wird in einer Konzentration von $10^{-4}$ bis $10^{-1}$, vorzugsweise $10^{-4}$ bis $2 \cdot 10^{-2}$ mol pro $dm^3$ Reaktorvolumen verwendet, bezogen auf den Gehalt an Aluminium. Prinzipiell sind aber auch höhere Konzentrationen möglich.

Bei der Herstellung von Copolymerisaten kann die Variation der Molverhältnisse des polycyclischen Olefins zum eingesetzten offenkettigen Olefin in einem weiten Bereich erfolgen. Bevorzugt werden molare Verhältnisse von 3:1 bis 100:1 Cycloolefin zu offenkettigem Olefin eingesetzt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer beinahe beliebig steuern. Bevorzugt werden Einbauraten zwischen 20 und 80 Mol-% der cyclischen Komponenten und besonders bevorzugt werden Einbauraten zwischen 40 und 60 Mol-% der cyclischen Komponenten.

Die mittlere Molmasse des gebildeten Copolymers läßt sich durch Wasserstoff-Dosierung, Variation der Katalysatorkonzentration oder Variation der Temperatur in bekannter Weise steuern.

Die Polydispersität $M_w/M_n$ der Copolymeren ist mit Werten zwischen 2,0 - 3,5 recht eng. Dadurch resultiert ein Eigenschaftbild der Polymerisate, das diese für das Spritzgießen besonders geeignet macht.

Weiterhin wurde anhand von NMR-Spektren festgestellt, daß sich diese Cycloolefincopolymere auch in ihrer Mikrostruktur deutlich von denen unterscheiden, die mit herkömmlichen Metallocenkatalysatoren hergestellt worden sind (vgl. Fig. 1). Dieser Unterschied könnte damit erklärt werden, daß die erfindungsgemäßen Katalysatoren aufgrund ihrer speziellen Symmetrie alternierend polymerisieren. Nach heutigem Kenntnisstand ist anzunehmen, daß die erfindungsgemäßen Cycloolefincopolymere alternierende Cycloolefinsequenzen enthalten, die eine strukturelle Differenzierbarkeit nach NMR ermöglichen (vgl. Figur 1).

Die erfindungsgemäß hergestellten Materialien eignen sich besonders zur Herstellung von Extrusionsteilen wie Folien, Schläuchen, Rohren, Stangen und Fasern als auch zur Herstellung von Spritzgußartikeln beliebiger Form und Größe.

Eine wichtige Eigenschaft der Materialien ist ihre Transparenz. Dadurch kommt besonders den optischen Anwendungen der extrudierten oder spritzgegossenen Teile aus diesen Materialien eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,555. Nach dem der Brechungsindex sehr nahe an dem von Kronglas (n = 1,51) liegt, können die erfindungsgemäßen Produkte als Glasersatz verschiedene Anwendungen finden wie beispielsweise Linsen, Prismen, Trägerplatten und -folien für optische Datenspeicher, für Videoplatten, für Compact Disks, als Deck- und Fokussierscheiben für Solarzellen, als Deck- und Streuscheiben für Leistungsoptiken, als Lichtwellenleiter in der Form von Fasern oder Folien.

Die Polymeren sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den Polymeren sind folgende Polymere einsetzbar:

Polyethylen, Polypropylen, (Ethylen-Propylen)-Copolymere, Polybutylen, Poly-(4-methyl-1-penten), Polyisopren, Polyisobutylen, Naturkautschuk, Poly(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid.

Die in den folgenden Beispielen angegebenen Glastemperaturen (Tg) wurden mittels DSC (Differential Scanning Calorimetry) bei einer Aufheizrate von 20°C/min bestimmt. Die angegebenen Viskositätszahlen wurden gemäß DIN 53 728 ermittelt.

Beispiel 1

Ein 1,5-$dm^3$-Reaktor wurde mit Ethylen gefüllt und mit 600 $cm^3$ einer 85 gewichtsprozentigen Lösung von Norbornen in Toluol gefüllt. Durch mehrfaches Aufdrücken von Ethylen (6 bar) wurde die Lösung mit Ethylen gesättigt. Es wurde ein Druck von 0,5 bar (Überdruck) eingestellt, 5 $cm^3$ toluolische Methylaluminoxanlösung (10,1 Gew.-% Methylaluminoxan der Molmasse 1300 g/Mol nach kryoskopischer Bestimmung) in den Reaktor gegeben und 15 min bei 70°C gerührt. Eine Lösung von 10 mg Isopropylen-(9-fluorenyl)(1-(3-methyl)-cyclopentadienyl)zirkondichlorid in 5 $cm^3$ toluolischer Methylaluminoxanlösung wurde nach 15 minütiger Voraktivierung zugegeben. (Zur Molekulargewichtsregelung kann Wasserstoff vor der Katalysatorzugabe zugegeben werden).

Unter Rühren (750 UPM) wurde eine Stunde bei 70°C polymerisiert, wobei der Ethylendruck durch Nachdosieren bei 0,5 bar gehalten wurde.

Die Reaktionslösung wurde in ein Gefäß abgelassen und schnell in 5 $dm^3$ Aceton eingetropft, 10 min gerührt und anschließend filtriert.

Der erhaltene Feststoff wurde mehrfach mit 10 %iger Salzsäure und Aceton im Wechsel gewaschen. Es wurde neutral gewaschen und nochmals mit Aceton gerührt. Das erneut filtrierte Polymer wurde bei 80°C und einem Druck von 0,2 bar 15 Stunden getrocknet.

Es wurden 18 g eines farblosen Polymers erhalten. Es wurde eine Viskositätszahl von 32 $cm^3$/g und eine Glastemperatur (Tg) von 145°C gemessen. Das Norbornen/Ethylen-Einbauverhältnis ist gemäß NMR-Spektrum ca. 50 Mol-% Norbornen zu 50 Mol-% Ethylen.

Beispiele 2 bis 6

Die Polymerisationen wurden analog Beispiel 1 durchgeführt, wobei die Ethylenüberdrucke gemäß Tabelle 1 variiert wurden.

Tabelle 1

| Bsp. Nr. | Menge Katalysator (mg) | Überdruck Ethylen (bar) | Reaktionszeit (min) | Ausbeute (g) | VZ ($cm^3$/g) | Tg (°C) |
|---|---|---|---|---|---|---|
| 1 | 10 | 0,5 | 15 | 18 | 32 | 145 |
| 2 | 11 | 1 | 60 | 11 | 47 | 146 |
| 3 | 10 | 2 | 15 | 44 | 55 | 140 |
| 4 | 5 | 4 | 15 | 50 | 79* | 132 |
| 5 | 10 | 6 | 30 | 29 | 96* | 120 |
| 6 | 0,7 | 10 | 45 | 10 | 144 | 93 |

* gemessen in o-Dichlorbenzol

Beispiele 7 bis 9

Die Polymerisationen wurden analog Beispiel 1 durchgeführt, wobei einige, in Tabelle 2 zusammengefaßte Bedingungen geändert wurden.

Tabelle 2

| Bsp. Nr. | Menge Katalysator (mg) | Überdruck Ethylen (bar) | Reaktionszeit (min) | Reaktionstemp. (°C) | Ausbeute (g) | Tg (°C) |
|---|---|---|---|---|---|---|
| 7 | 61 | 0,5 | 60 | 40 | 7 | 144 |
| 8 | 61 | 1 | 60 | 40 | 9 | 133 |
| 9 | 120 | 0 | 30 | 25 | 17 | 139 |

Vergleichsbeispiele 10 bis 16

Die Polymerisationen wurden analog Beispiel 1 durchgeführt. Das eingesetzte Metallocen war Isopropylen-(9-fluorenyl)(cyclopentadienyl)zirkondichlorid. Dieses Metallocen entspricht nicht den erfindungsgemäßen Anforderungen an die Symmetrie im Molekülteil, der durch $M^1$ und $R^{16}$-$R^{17}$ gebildet wird, da hier weitere Symmetrieelemente, wie z.B. vertikale Spiegelebene, auftreten. Es wurden die in Tabelle 3 aufgeführten Reaktionsbedingungen gewählt.

Tabelle 3

| Bsp. Nr. | Menge Metallocen (mg) | Überdruck Ethylen (bar) | Reaktionszeit (min) | Ausbeute (g) | VZ ($cm^3/g$) | Tg (°C) |
|---|---|---|---|---|---|---|
| 10 | 1 | 0,5 | 60 | 44 | 110 | 200 |
| 11 | 1 | 1 | 60 | 39 | 93 | 192 |
| 12 | 0,5 | 2 | 60 | 29 | 117 | 180 |
| 13 | 10 | 3 | 60 | 21 | 132 | 162 |
| 14 | 1 | 6 | 15 | 43 | 130 | 153 |
| 15 | 2 | 6 | 10 | 29 | 124 | 151 |
| 16 | 10 | 10 | 30 | 22 | 118 | 119 |

Beispiel 19

Die Polymerisation erfolgte gemäß Beispiel 1. Es wurde eine 85 gewichtsprozentige Lösung von Tetracyclododecen in Toluol eingesetzt und mit 1 mg Isopropylen-(9-fluorenyl)-(1-(3-methyl)-cyclopentadienyl)-zirkondichlorid bei 70°C und 10 bar Ethylenüberdruck eine Stunde polymerisiert.

Es wurden 3,2 g Copolymer erhalten. Die Glastemperatur betrug 159°C.

Beispiel 20 (nicht erfindungsgemäß)

Anstatt einer Norbornenlösung wurde flüssiges Norbornen eingesetzt und bei 0,5 bar Ethylendruck wurde mit 10 mg meso-Dimethylsilyl-bis(1-(2,4-dimethyl)cyclopentadienyl)-zirkondichlorid polymerisiert.

Es wurden 5,6 g Copolymer erhalten. Die Glastemperatur betrug 102°C.

Beispiel 21

Von den nach Beispiel 1 bis 6 erhaltenen Polymeren wurden in einer Filmpresse aus je 3 g Polymer bei 300°C Platten gepreßt (Durchmesser 6 cm). Anschließend wurde sofort in kaltem Wasser abgeschreckt.
Proben dieser Preßplatten wurden erneut in der DSC untersucht. Die beim ersten Aufheizen gefundenen Glastemperaturen (Tg), Rekristallisationstemperaturen (Ter) und Schmelztemperaturen (Tm) sind in Tabelle 4 aufgeführt.

Tabelle 4

| Polymer gemäß | | | |
|---|---|---|---|
| Beispiel | Tg/°C | Ter/°C | Tm/°C |
| 1 | 143 | - | 244 |
| 2 | 140 | 214 | 258 |
| 3 | 136 | 216 | 271 |
| 4 | 130 | 226 | 276 |
| 5 | 118 | 211 | 264 |
| 6 | 108 | 167 | 235 |

Beispiel 22

Die Polymerisation erfolgte analog Beispiel 1. Es wurde eine 85 gew.-%ige Lösung von Tetracyclododecen in Toluol eingesetzt und mit 10 mg Methylphenylmethylen-(9-fluorenyl)[1-(3-methyl)cyclopentadienyl]zirkondichlorid bei 70°C und 1 bar Ethylendruck (Überdruck) eine Stunde polymerisiert. Es wurden 18,2 g Copolymer erhalten. Eine Probe wurde unter Stickstoff bei 350°C geschmolzen und anschließend abgeschreckt. Es wurde eine Glastemperatur von

192°C, eine Kristallisationstemperatur von 253°C und eine Schmelztemperatur von 335°C gemessen.

Beispiel 23

Die Polymerisation wurde analog Beispiel 1 ausgeführt. Es wurden 500 $cm^3$ 5-Methylnorborn-2-en eingesetzt und mit 2 mg Isopropenyl (9-fluorenyl)[1-(3-methyl)-cyclopentadienyl]zirkondichlorid und 60 ml Methylaluminoxan zwei Stunden bei 70°C und 4 bar Ethylendruck (Überdruck) polymerisiert. Es wurden 21,3 g Polymer erhalten. Die Lösungsviskosität betrug 104 $cm^3/g$ und die Glastemperatur betrug 117°C. In der DSC konnte keine Kristallisation und keine Schmelztemperatur gefunden werden. Laut $^{13}C$-NMR sind 41 Mol-% 5-Methylnorbornen im Copolymer enthalten.

Beispiel 24

Es wurde analog Beispiel 1 polymerisiert. Es wurden 12 mg Isopropenyl-(9-fluorenyl)-[1-(3-isopropyl)cyclopentadienyl]zirkondichlorid eingesetzt und eine Stunde bei 40°C und 3 bar Ethylenüberdruck polymerisiert. Es wurden 17,9 g Polymer erhalten. Die Schmelztemperatur betrug 286°C.

Beispiel 25

Die Polymerisation wurde analog Beispiel 5 durchgeführt. Es wurden 5 mg Diphenylmethylen-(9-fluorenyl)-[1-(3-methyl)cyclopentadienyl]zirkondichlorid eingesetzt. Es wurden 43 g Polymer erhalten. Die Glastemperatur betrug 124°C und die Schmelztemperatur 275°C.

Erläuterungen zu den Abbildungen:

Fig. 1 zeigt die $^{13}C$-NMR-Spektren der Polymere, die gemäß Beispiel 1 (erfindungsgemäßer Metallocenkatalysator mit $C_1$-Symmetrie in dem Teil des Metallocenmoleküls, der durch $M^1$ und $R^{16}$-$R^{17}$ gebildet wird) und Beispiel 14 (herkömmlicher Metallocenkatalysator; vgl. die Ausführungen zu den Vergleichsbeispielen 10 bis 16) erhalten wurden. Die Unterschiede in der Mikrostruktur sind deutlich zu erkennen.

Fig. 2 zeigt den unterschiedlichen Verlauf der Abhängigkeit der Glastemperatur (Tg) vom Ethylendruck bei der Verwendung von

a) herkömmlichen Metallocenkatalysatoren ohne $C_1$-Symmetrie im genannten Molekülteil des Metallocens (obere Kurve, aufgenommen mit den Daten gemäß Tabelle 3) und
b) bei der Verwendung von erfindungsgemäßen Metallocenkatalysatoren (untere Kurve, aufgenommen mit den Daten gemäß Tabelle 1).

Neben den stark unterschiedlichen Kurvenverläufen, ist insbesondere die weitaus geringere Abhängigkeit der Glastemperatur (Tg) des erhaltenen Copolymers vom Ethylendruck (Veränderung der Reaktionsparameter) bei Verwendung der erfindungsgemäßen Metallocenkatalysatoren hervorzuheben. Dieser geringere Einfluß der Reaktionsparameter auf das Reaktionsprodukt führt zwangsläufig zu chemisch einheitlichen Copolymeren.

## Patentansprüche

1. Verfahren zur Herstellung eines Cycloolefincopolymers durch Polymerisation von 0,1 bis 99,9 Gew.-%, bezcgen auf die Gesamtmenge der Monomeren, mindestens eines Monomers der Formeln I, II, III, IV, V oder VI

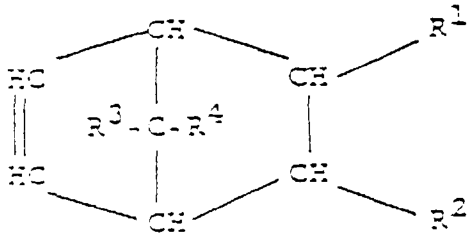

(I),

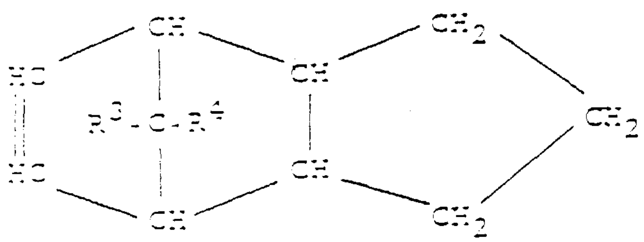

(II),

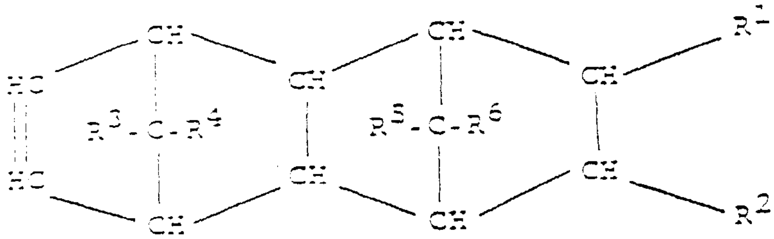

(III),

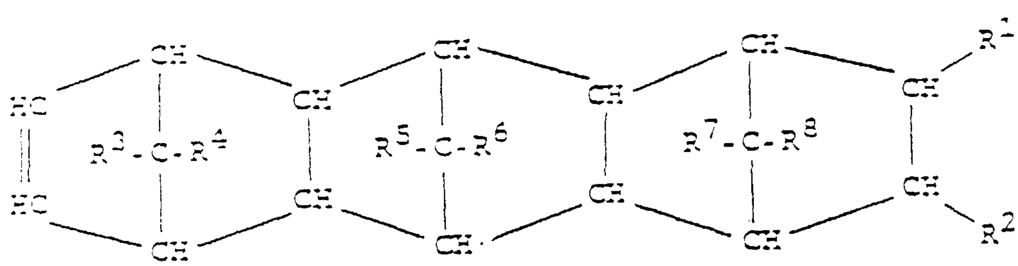

(IV),

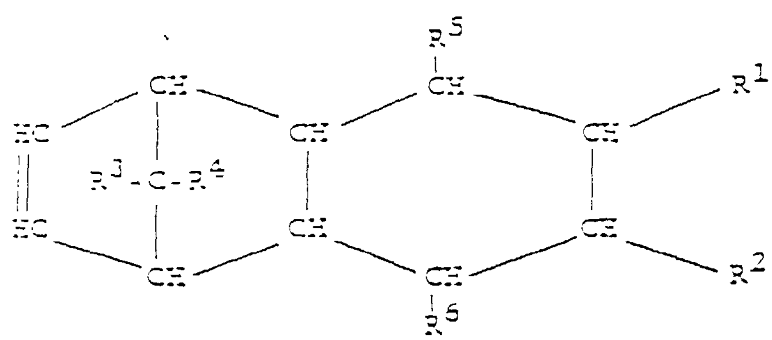

(V),

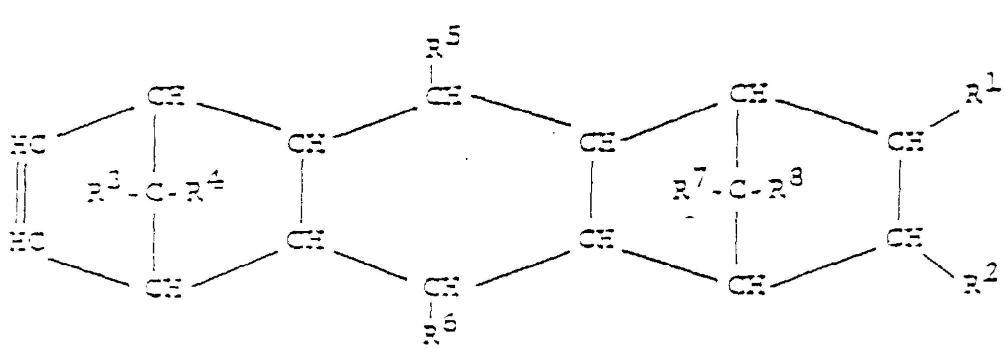

(VI),

worin $R^1$, $R^2$, $R^3$, $R^4$, $R^5$, $R^6$, $R^7$ und $R^8$ gleich oder verschieden sind und ein Wasserstoffatom, einen $C_6$-$C_{16}$-Aryl- oder einen $C_1$-$C_8$-Alkylrest bedeuten, wobei gleiche Reste in den verschiedenen Formeln eine unterschiedliche

Bedeutung haben können,
0 bis 99,9 Gew.-%, bezogen auf die Gesamtmenge der Monomeren, eines Cycloolefins der Formel VII

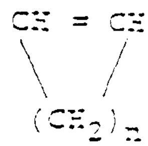

(VII),

worin n eine Zahl von 2 bis 10 ist, und
0 bis 99,9 Gew.-%, bezcgen auf die Gesamtmenge der Monomeren, mindestens eines acyclischen Olefins der Formel VIII

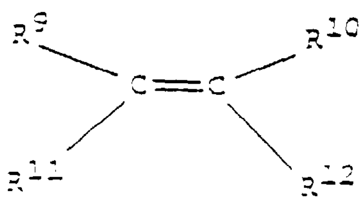

(VIII),

worin $R^9$, $R^{10}$, $R^{11}$ und $R^{12}$ gleich oder verschieden sind und ein Wasserstoffatom oder einen $C_1$-$C_8$-Alkylrest bedeuten, bei Temperaturen von -78 bis 150°C und einem Druck von 0,01 bis 64 bar, in Gegenwart eines Katalysators, welcher aus einem Aluminoxan der Formel IX

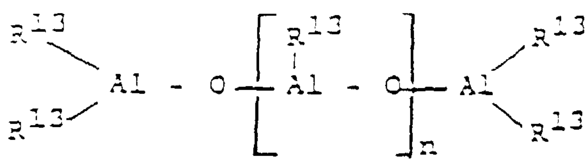

(IX)

für den linearen Typ und/oder der Formel X

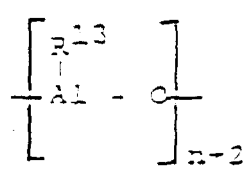

(X)

für den cyclischen Typ, wobei in den Formeln IX und X die Reste $R^{13}$ gleich oder verschieden sind und eine $C_1$-$C_6$-Alkylgruppe oder Phenyl oder Benzyl bedeuten und n eine ganze Zahl von 0 bis 50 ist, und einem Metallocen der Formel XI

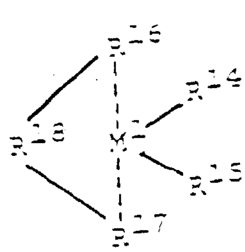

(XI)

besteht, worin

M¹ Titan, Zirkon, Hafnium, Vanadium, Niob oder Tantal ist,

$R^{14}$ und $R^{15}$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Arylorygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten,

$R^{16}$ und $R^{17}$ verschieden sind und einen ein oder mehrkernigen Kohlenwasserstoffrest, welcher mit dem Zentralatom $M^1$ eine Sandwichstruktur bilden kann, bedeuten,

$R^{18}$

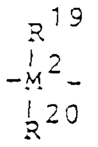 , 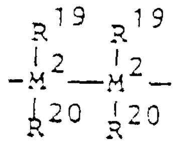 , 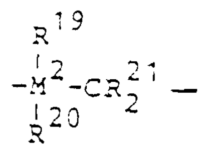 , 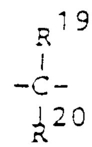 , 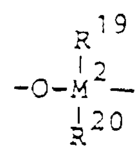 , 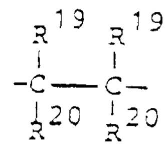 ,

= $BR^{19}$, = $AlR^{19}$, -Ge-, -Sn-, -O-, -S-, = SO, = $SO_2$, = $NR^{19}$, -= CO, = $PR^{19}$ oder-= $P(O)R^{19}$ ist, wobei $R^{19}$, $R^{20}$ und $R^{21}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^{19}$ und $R^{20}$ oder $R^{19}$ und $R^{21}$ jeweils mit den sie verbindenden Atomen einen Ring bilden, und

$M^2$ Silizium, Germanium oder Zinn ist, wobei der Teil des Metallocenmoleküls, der durch $M^1$ und die Substituenten $R^{16}$-$R^{17}$ gebildet wird, $C_1$-Symmetrie aufweist.

2. Verfahren gemäß Anspruch 1, wobei im flüssigen Cycloolefinmonomer, Cycloolefinmonomergemisch oder in konzentrierten Lösungen polymerisiert wird.

3. Verfahren gemäß Anspruch 1 oder 2, wobei als Metallocen der Formel XI Isopropylen-(9-fluorenyl)(1-(3-isopropyl) cyclopentadienyl)-zirkondichlorid, Isopropylen-(9-fluorenyl) (1-(3-methyl)cyclopentadienyl)-zirkondichlorid, Diphenylmethylen-(9-fluorenyl) (1-(3-methyl)cyclopentadienyl)-zirkondichlorid, Methylphenylmethylen-(9-fluorenyl)(1-(3-methyl)cyclopentadienyl)-zirkondichlorid, Dimethylsilyl-(9-fluorenyl)(1-(3-methyl)cyclopentadienyl)-zirkondichlorid, Diphenylsilyl-(9-fluorenyl)(1-(3-methyl)cyclopentadienyl)-zirkondichlorid, Diphenylmethylen-(9-fluorenyl)(1-(3-tert.-butyl)cyclopentadienyl)-zirkondichlorid, Isopropylen-(9-fluorenyl)(1-(3-tert.-butyl)cyclopentadienyl)-zirkondichlorid oder ein entsprechendes Hafniumdichlorid verwendet wird.

4. Verfahren gemäß einem oder menreren der Ansprüche 1 bis 3, wobei das polycyclische Olefin Norbornen oder Tetracyclododecen ist.

5. Verfahren gemäß einem oder mehreren der Ansprüche 1 bis 4, wobei ein Copolymer aus Norbornen und Ethylen hergestellt wird.

6. Verfahren gemäß einem oder mehreren der Ansprüche 1 bis 5, wobei neben einem Aluminoxan eine salzartige Verbindung der Formel $R_xNH_{4-x}BR'_4$ oder der Formel $R_3PHBR'_4$ als Cokatalysator verwendet wird und wobei x = 1, 2 oder 3, R = Alkyl oder Aryl, gleich oder verschieden, und R' = Aryl, das fluoriert sein kann, bedeuten.

7. Verfahren wie in einem oder mehreren der Ansprüche 1 bis 5 beschrieben, wobei anstelle eines Aluminoxans eine salzartige Verbindung der Formel $R_xNH_{4-x}BR'_4$ oder der Formel $R_3PHBR'_4$ als Cokatalysator verwendet wird und wobei x = 1, 2 oder 3, R = Alkyl oder Aryl, gleich oder verschieden, und R' = Aryl, das fluoriert sein kann, bedeuten.

## Claims

1. A process for the preparation of a cycloolefin copolymer by polymerization of from 0.1 to 99.9% by weight, based on the total amount of the monomers, of at least one monomer of the formula I, II, III, IV, V or VI

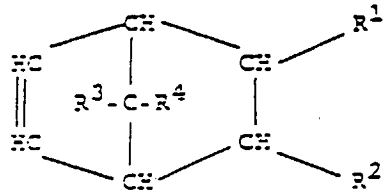

(I),

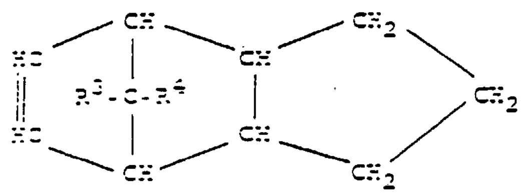

(II),

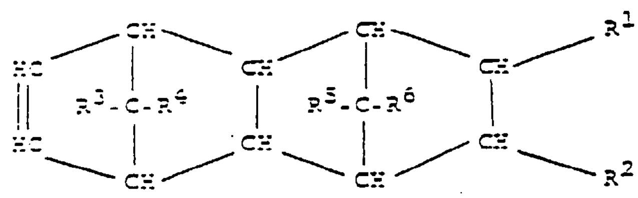

(III),

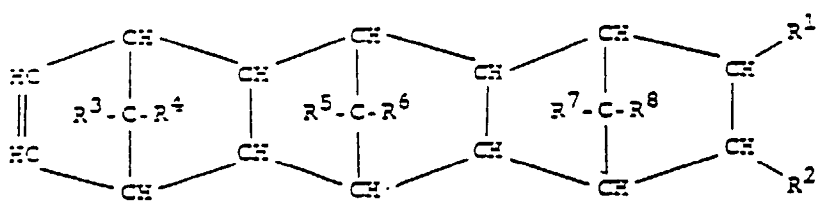

(IV),

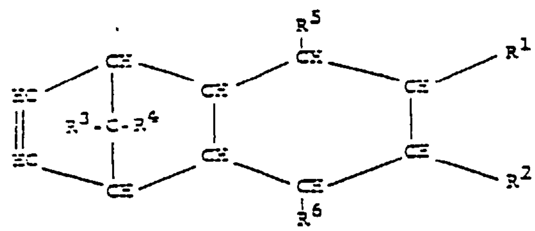

(V),

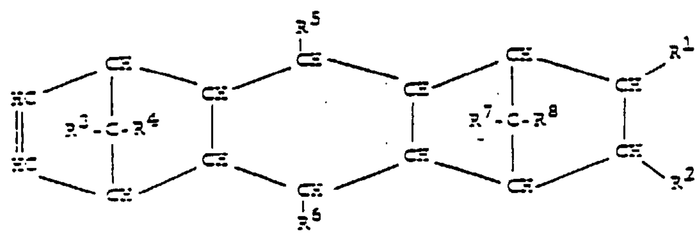

(VI),

in which $R^1$, $R^2$, $R^3$, $R^4$, $R^5$, $R^6$, $R^7$ and $R^8$ are identical or different and are a hydrogen atom or a $C_6$-$C_{16}$-aryl or $C_1$-$C_8$-alkyl radical, it being possible for identical radicals in the different formulae to have different meanings, from 0 to 99.9% by weight, based on the total amount of the monomers, of a cycloolefin of the formula VII

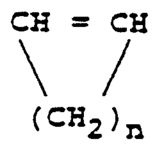

(VII),

in which n is a number from 2 to 10, and
from 0 to 99.9% by weight, based on the total amount of the monomers, of at least one acyclic olefin of the formula VIII

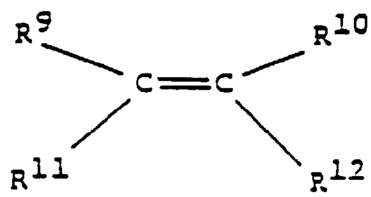

(VIII),

in which $R^9$, $R^{10}$, $R^{11}$ and $R^{12}$ are identical or different and are a hydrogen atom or a $C_1$-$C_8$-alkyl radical, at temperatures of from -78 to 150°C and at a pressure of from 0.01 to 64 bar, in the presence of a catalyst which comprises an aluminoxane of the formula IX

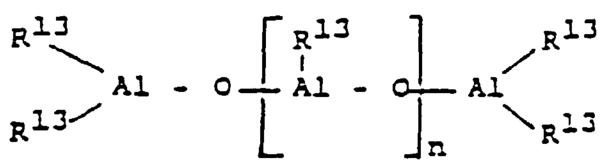

(IX)

for the linear type and/or formula X

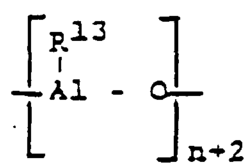

(X)

for the cyclic type, where, in the formulae IX and X, the radicals $R^{13}$ are identical or different and are a $C_1$-$C_6$-alkyl group or phenyl or benzyl, and n is an integer from 0 to 50, and a metallocene of the formula XI

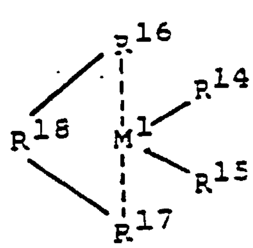

(XI)

in which

$M^1$ is titanium, zirconium, hafnium, vanadium, niobium or tantalum,

$R^{14}$ and $R^{15}$ are identical or different and are a hydrogen atom, a halogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group or a $C_8$-$C_{40}$-arylalkenyl group,

$R^{16}$ and $R^{17}$ are different and are amonovalent or polyvalent hydrocarbon radical which is able to form a sandwich structure together with the central atom $M^1$,

$R^{18}$ is

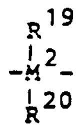 , 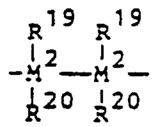 , 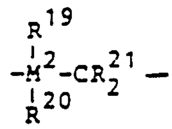 , 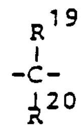 , 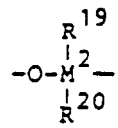 , 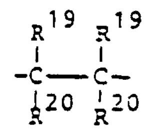 ,

$=BR^{19}$, $=AlR^{19}$, -Ge-, -Sn-, -O-, -S-, =SO, $=SO_2$, $=NR^{19}$, =CO, $=PR^{19}$ or $=P(O)R^{19}$ where $R^{19}$, $R^{20}$ and $R^{21}$ are identical or different and are a hydrogen atom, a halogen atom, a $C_1$-$C_{10}$-alkyl group, a $C_1$-$C_{10}$-fluoroalkyl group, a $C_6$-$C_{10}$-fluoroaryl group, a $C_6$-$C_{10}$-aryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^{19}$ and $R^{20}$ or $R^{19}$ and $R^{21}$, in each case with the atoms connecting them, form a ring, and

$M^2$ is silicon, germanium or tin,

where the part of the metallocene molecule formed by $M^1$ and the substituents $R^{16}$-$R^{17}$ has $C_1$ symmetry.

2. A process as claimed in claim 1, where the polymerization is carried out in the liquid cycloolefin monomer, a cycloolefin monomer mixture or in concentrated solutions.

3. A process as claimed in claim 1 or 2, where the metallocene of the formula XI is isopropylene(9-fluorenyl) (1-(3-isopropyl)cyclopentadienyl)zirconium dichloride, isopropylene(9-fluorenyl) (1- (3-methyl)-cyclopentadienyl)zirconium dichloride, diphenylmethylene(9-fluorenyl)(1-(3-methyl)cyclopentadienyl)zirconium dichloride, methylphenylmethylene(9-fluorenyl)(1-(3-methyl)cyclopentadienyl)zirconium dichloride, dimethylsilyl(9-fluorenyl)(1-(3-methyl)-cyclopentadienyl)zirconium dichloride, diphenyl-silyl(9-fluorenyl)(1-(3-methyl)cyclopentadienyl)-zirconium dichloride, diphenylmethylene(9-fluorenyl)(1-(3-tert.-butyl)cyclopentadienyl)zirconium dichloride and isopropylene (9-fluorenyl)(1- (3-tert.-butyl)cyclopentadienyl)zirconium dichloride or a corresponding hafnium dichloride.

4. A process as claimed in one or more of claims 1 to 3, where the polycyclic olefin is norbornene or tetracyclododecene.

5. A process as claimed in one or more of claims 1 to 4, where a copolymer of norbornene and ethylene is prepared.

6. A process as claimed in one or more of claims 1 to 5, where, in addition to an aluminoxane, a salt-like compound of the formula $R_xNH_{4-x}BR'_4$ or of the formula $R_3PHBR'_4$ is used as cocatalyst and where x is 1, 2 or 3, R is identical or different alkyl or aryl, and R' is aryl, which may be fluorinated.

7. A process as described in one or more of claims 1 to 5, where, instead of an aluminoxane, a salt-like compound of the formula $R_xNH_{4-x}BR'_4$ or of the formula $R_3PHBR'_4$ is used as cocatalyst and where x is 1, 2 or 3, R is identical or different alkyl or aryl, and R' is aryl, which may be fluorinated.

## Revendications

1. Procédé de préparation d'un copolymère d'une cyclooléfine par la polymérisation de 0,1 à 99,9% en poids, par rapport à la quantité totale des monomères, d'au moins un monomère des formules I, II, III, IV, V ou VI :

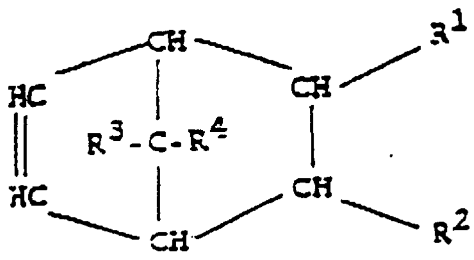

(I)

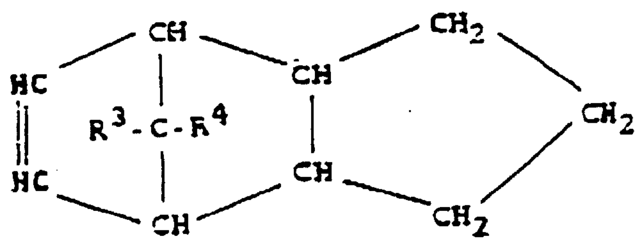

(II)

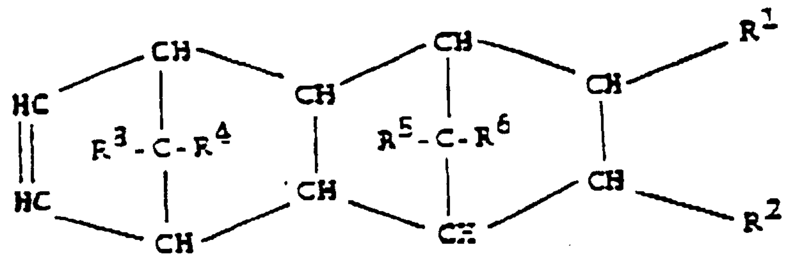

(III)

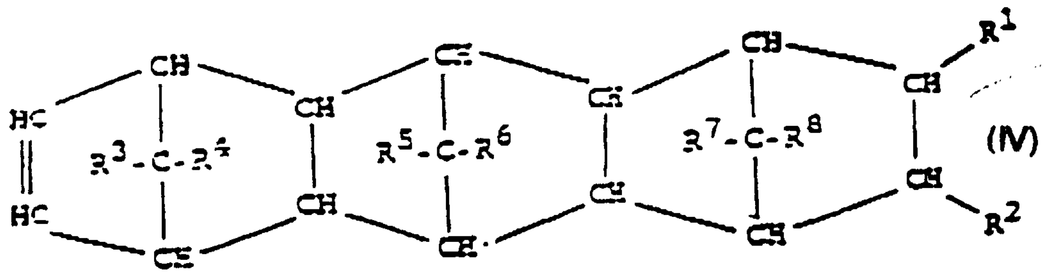

(IV)

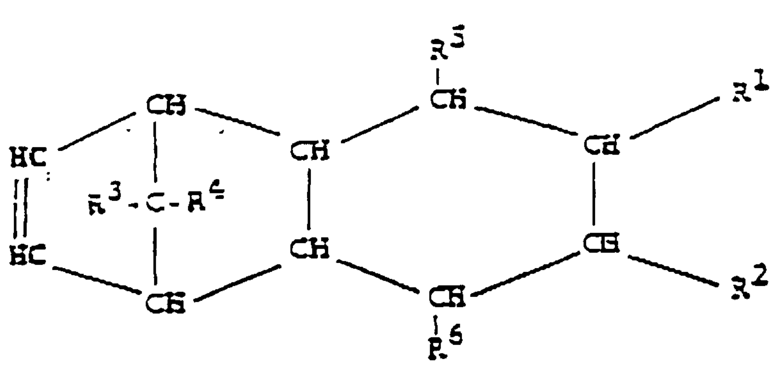

(V)

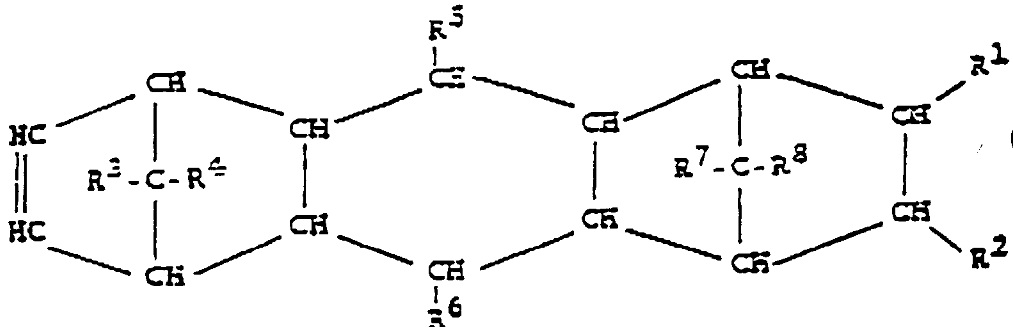

(VI)

dans lesquelles $R^1$, $R^2$, $R^3$, $R^4$, $R^5$, $R^6$, $R^7$ et $R^8$ sont identiques ou différents et représentent chacun un atome d'hydrogène, un radical aryle en $C_6$ à $C_{16}$, ou un radical alkyle en $C_1$ à $C_8$, où les deux symboles dans les diverses formules peuvent avoir une signification différente,

de 0 à 99,9% en poids, par rapport à la quantité totale des monomères, d'une cyclooléfine de la formule VII :

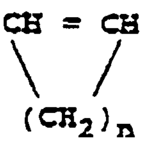

(VII)

dans laquelle n est un nombre qui varie de 2 à 10, et

de 0 à 99,9% en poids, par rapport à la quantité totale des monomères, d'au moins une oléfine acyclique de la formule VIII :

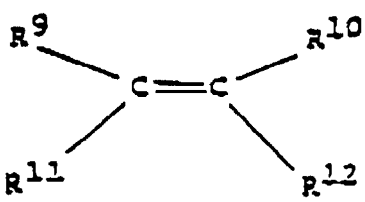

(VIII)

dans laquelle $R^9$, $R^{10}$, $R^{11}$ et $R^{12}$ sont identiques ou différents et représentent chacun un atome d'hydrogène ou un radical alkyle en $C_1$ à $C_6$, à des températures de -78 à 150°C et sous une pression de 0,01 à 64 bars, en présence d'un catalyseur, qui se compose d'un aluminoxane de la formule IX:

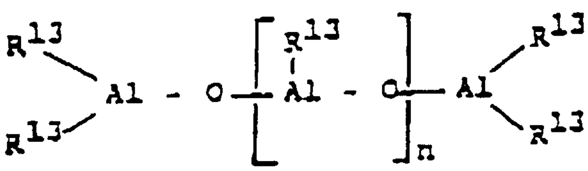

(IX)

pour le type linéaire et/ou de la formule X :

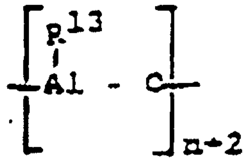

(X)

pour le type cyclique, où dans les formules IX et X, les symboles $R^{13}$ peuvent être identiques ou différents et représentent chacun un groupe alkyle en $C_1$ à $C_6$ ou un groupe phényle ou benzyle et n représente un nombre entier dont la valeur varie de 0 à 50, et d'un métallocène de la formule XI :

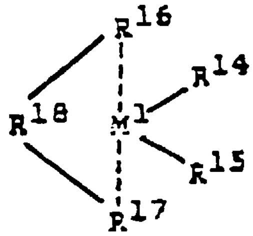

(XI)

dans laquelle

$M^1$ représente le titane, le zirconium, l'hafnium, le vanadium, le niobium ou le tantale,
$R^{14}$ et $R^{15}$ peuvent être identiques ou différents et représentent chacun un atome d'hydrogène, un atome d'halogène, un radical alkyle en $C_1$ à $C_{10}$, un radical alcoxy en $C_1$ à $C_{10}$, un groupe aryle en $C_6$ à $C_{10}$, un groupe aryloxy en $C_6$ à $C_{10}$, un groupe alcényle en $C_2$ à $C_{10}$, un groupe arylalkyle en $C_7$ à $C_{40}$, un groupe alkylaryle en $C_7$ à $C_{40}$ ou un groupe arylalcényle en $C_8$ à $C_{40}$,
$R^{16}$ et $R^{17}$ sont identiques ou différents et représentent chacun un reste d'hydrocarbure mononucléaire ou polynucléaire, lequel peut former une structure sandwich avec l'atome central $M^1$,
$R^{15}$ représente un groupe de la formule

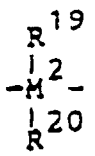 , 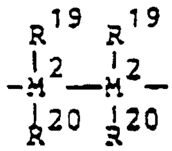 , 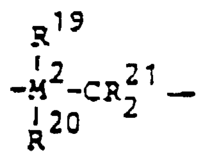 , 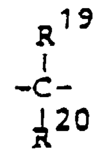 , 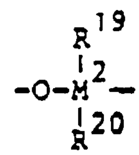 , 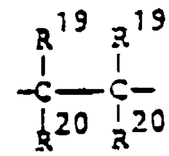 ,

= $BR^{19}$, = $AlR^{19}$, -GE =, -Sn-, -O-, -S-, =SO, =$SO_2$, =$NR^{19}$, = CO, = $PR^{19}$ ou = $P(O)R^{19}$, ou $R^{19}$, $R^{20}$ et $R^{21}$ sont identiques ou différents et représentent chacun un atome d'hydrogène, un atome d'halogène, un radical alkyle en $C_1$ à $C_{10}$, un radical fluoralkyle en $C_1$ à $C_{10}$, un radical fluoraryle en $C_6$ à $C_{10}$, un radical aryle en $C_6$ à $C_{10}$, un radical alcoxy en $C_1$ à $C_{10}$, un radical alcényle en $C_2$ à $C_{10}$, un radical arylalkyle en $C_7$ à $C_{40}$, un radical arylalcényle en $C_8$ à $C_{40}$, ou un radical alkylaryle en $C_7$ à $C_{40}$, ou bien $R^{19}$ et $R^{20}$ ou $R^{19}$ et $R^{21}$ forment à chaque fois un cycle avec les atomes qui les relient, et
$M^2$ représente le silicium, le germanium ou l'étain, où la partie de la molécule de métallocène qui est formée par $M^1$ et les substituants $R^{16}$-$R^{17}$ présente une symétrie $C_1$.

2. Procédé suivant la revendication 1, où on opère la polymérisation dans un mélange de monomères de cyclooléfines liquide dans un monomère de cyclooléfine liquide, ou dans des solutions concentrées.

3. Procédé suivant la revendication 1 ou 2, où on utilise, à titre de métallocène de la formule XI, le dichlorure d'isopropylène-(9-fluorényl)(1-(3-isopropyl)cyclopentadiényl)-zirconium, le dichlorure d'isopropylène-(9-fluorényl)(1-(3-méthyl)cyclopentadiényl)-zirconium, le dichlorure de diphénylméthylène-(9-fluorényl)(1-(3-méthyl)cyclopentadiényl)-zirconium, le dichlorure de méthylphénylméthylène-(9-fluorényl)(1-(3-cyclopentadiényl)-zirconium, le dichlorure de diméthylsilyl-(9-fluorényl)(1-(3-cyclopentadiényl)-zirconium, le dichlorure de diphénylsilyl(9-fluorényl)(1-(3-cyclopentadiényl)-zirconium, le dichlorure de diphénylméthylène-(9-fluorényl)(1-(3-tert-butyl)cyclopentadiényl)-zirconium, le dichlorure d'isopropylène-(9-fluorényl)(1-(3-tert-butyl)cyclopentadiényl)-zirconium, ou un dichlorure d'hafnium correspondant.

4. Procédé suivant une ou plusieurs des revendications 1 à 3, où l'oléfine polycyclique est le norbornène ou le tétracyclododécène.

5. Procédé suivant une ou plusieurs des revendications 1 à 4, où on prépare un copolymère du norbornène et de l'éthylène.

6. Procédé suivant une ou plusieurs des revendications 1 à 5, où, outre un aluminoxane, on utilise un composé salin de la formule $R_xNH_{4-x}BR'_4$ ou de la formule $R_3PHBR'_4$ à titre de cocatalyseur et où x est égal à 1, 2 ou 3, R représente un groupe alkyle ou aryle, identique ou différent, et R' représente un groupe aryle qui peut être fluoré.

7. Procédé suivant une ou plusieurs des revendications 1 à 5, où au lieu d'un aluminoxane, on utilise un composé salin de la formule $R_xNH_{4-x}BR'_4$ ou de la formule $R_3PHBR'_4$ à titre de cocatalyseur et où x est égal à 1, 2 ou 3, R représente un groupe alkyle ou aryle, identique ou différent, et R' représente un groupe aryle qui peut être fluoré.

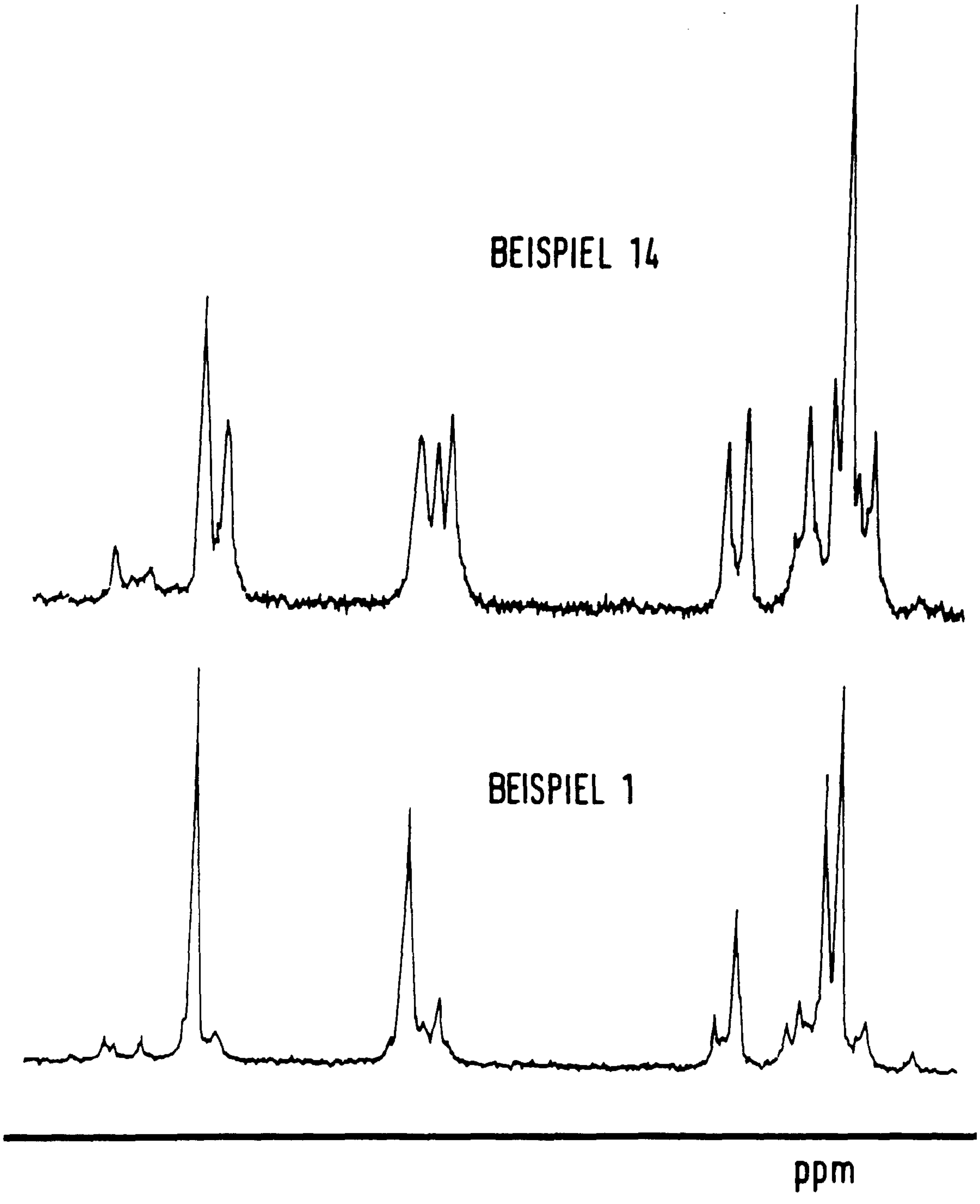


Fig. 1

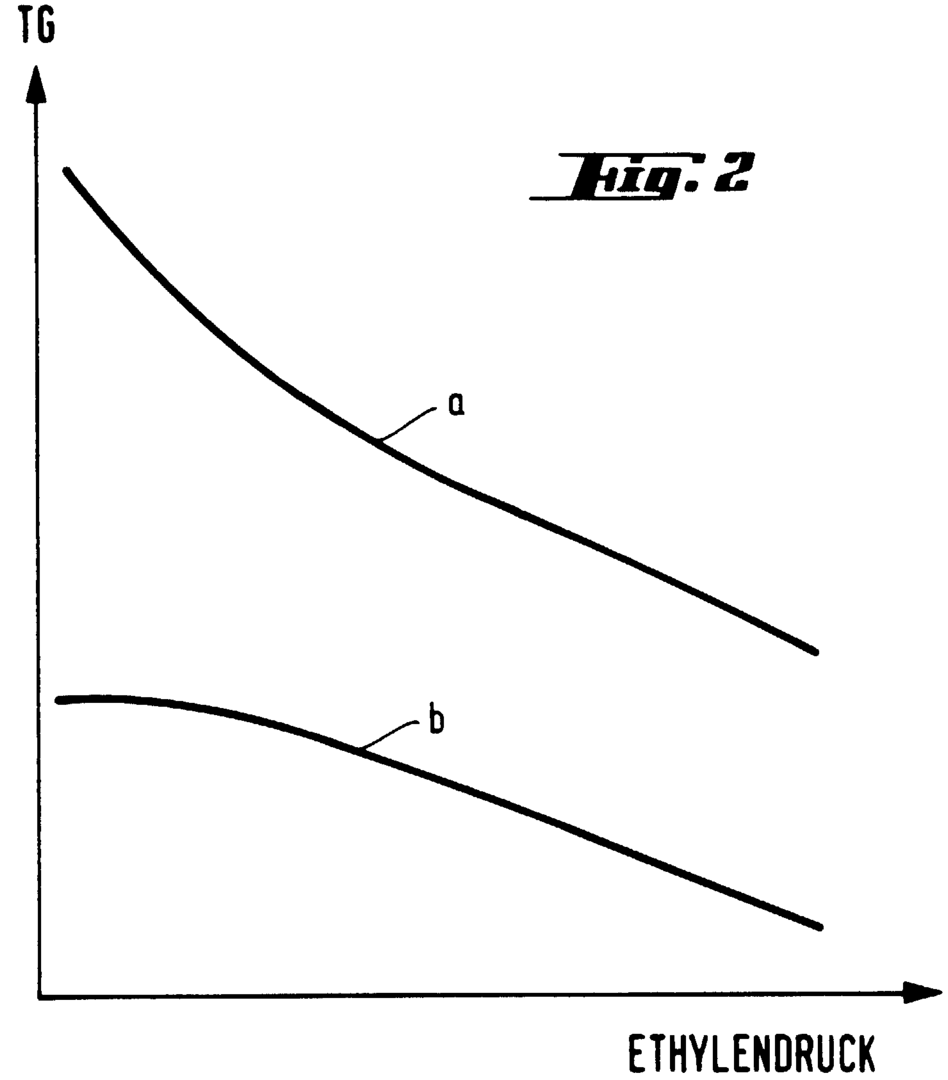


Fig. 2